(19) Europäisches Patentamt
European Patent Office
Office européen des brevets

(11) **EP 4 625 071 A1**

(12) **EUROPEAN PATENT APPLICATION**
published in accordance with Art. 153(4) EPC

(43) Date of publication:
**01.10.2025 Bulletin 2025/40**

(21) Application number: **24883829.4**

(22) Date of filing: **30.04.2024**

(51) International Patent Classification (IPC):
**G05B 19/042** (2006.01)    **G05B 13/04** (2006.01)

(52) Cooperative Patent Classification (CPC):
Y02T 10/40

(86) International application number:
**PCT/CN2024/090995**

(87) International publication number:
**WO 2025/091815 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2024 CN 202410358261**

(71) Applicant: **Anhui Heli Co., Ltd.**
**Hefei, Anhui 230601 (CN)**

(72) Inventors:
• **ZHOU, Jun**
**Hefei, Anhui 230601 (CN)**
• **ZHANG, Donglin**
**Hefei, Anhui 230601 (CN)**
• **BI, Sheng**
**Hefei, Anhui 230601 (CN)**
• **CHEN, Yang**
**Hefei, Anhui 230601 (CN)**
• **BAI, Yingchun**
**Hefei, Anhui 230601 (CN)**
• **CHENG, Qing**
**Hefei, Anhui 230601 (CN)**
• **XIA, Guang**
**Hefei, Anhui 230601 (CN)**

(74) Representative: **VKK Patentanwälte PartG mbB**
**Edisonstraße 2**
**87437 Kempten (DE)**

(54) **OFF-ROAD VEHICLE PATH TRACKING STABILITY CONTROL METHOD FOR COMPLEX TERRAIN**

(57) Disclosed in the present invention is a method for controlling the path tracking stability of an off-road vehicle in a complex terrain, comprising the following steps: step 1, constructing a wheel-ground interaction model to obtain a longitudinal force $F_x$, a lateral force $F_y$ and a vertical force of $F_z$ of a wheel-ground interaction; step 2, constructing a roll evaluation index $J_1$ and a sideslip evaluation index $J_2$ through the wheel-ground interaction model, and performing weighted processing on the two indexes to obtain a comprehensive stability evaluation index $RSS$; step 3, training the comprehensive stability evaluation index, and adjusting weight coefficients of $J_1$ and $J_2$ in the comprehensive stability evaluation index $RSS$; step 4, constructing an MPC controller through the comprehensive stability evaluation index; and step 5, performing stability control of the vehicle through the MPC controller. The invention proposes a comprehensive lateral stability evaluation index, and the evaluation index is continuously optimized through a reinforcement learning algorithm, so that the evaluation index can more accurately characterize the lateral stability.

Fig. 1

## Description

### Technical field

The present invention relates to the field of vehicle path tracking and stability control, in particular to a method for controlling the path tracking stability of an off-road vehicle in a complex terrain.

### Technical background

With the development of the times, the demand for forklifts in different scenarios has gradually increased, and the application environment has gradually become more complex. Meanwhile, due to the continuous improvement of computing power and the emergence of demand, the concept of intelligence has gradually become popular. Therefore, people's requirements for smart forklifts have gradually increased to be able to ensure stability and tracking accuracy even in a complex terrain.

The driving of a forklift in a complex terrain is not exactly the same as driving on a structured road due to the influence of the interaction between the wheels and the ground. Meanwhile, when driving in a complex terrain, the forklift is more likely to suffer from lateral instability and lateral tracking errors. Lateral instability is divided into two forms: roll instability and sideslip instability. However, the evaluation of instability is mostly a single index, and it is impossible to comprehensively evaluate lateral stability. Meanwhile, many smart vehicles only consider the problem of tracking accuracy and ignore the instability that may occur during the tracking process. If lateral instability occurs during tracking, the tracking process will be meaningless.

### Summary of the invention

An object of the present invention is to provide a method for controlling the path tracking stability of an off-road vehicle in a complex terrain to solve the problems proposed in the above background art.

To achieve the above object, the present invention provides the following technical solution:

A method for controlling the path tracking stability of an off-road vehicle in a complex terrain, comprising the following steps:

step 1, constructing a wheel-ground interaction model to obtain a longitudinal force $F_x$, a lateral force $F_y$ and a vertical force of $F_z$ of a wheel-ground interaction;
step 2, constructing a roll evaluation index $J_1$ and a sideslip evaluation index $J_2$ through the wheel-ground interaction model, and performing weighted processing on the two indexes to obtain a comprehensive stability evaluation index $RSS$;
step 3, training the comprehensive stability evaluation index, and adjusting weight coefficients of $J_1$ and $J_2$ in the comprehensive stability evaluation index $RSS$;
step 4, constructing an MPC controller through the comprehensive stability evaluation index; and
step 5, performing stability control of the vehicle through the MPC controller.

As a further solution of the present invention: constructing the wheel-ground interaction model comprises the following steps:

step 1.1, constructing a static pressure-bearing model to obtain a static sinkage of a wheel;
step 1.2, calculating a slip ratio of the wheel, and constructing a dynamic sinking model of the wheel to obtain a normal stress calculation method that takes wheel sinking into consideration; and
step 1.3, constructing a shear model to obtain a shear stress calculation method that takes wheel sinking into account.

As a further solution of the present invention: steps for establishing and optimizing the comprehensive stability evaluation index are as follows:

step 2.1, establishing a rollover evaluation index $J_1$;
step 2.2, establishing sideslip evaluation indexes $R_f$ and $R_r$ of a front axle and a rear axle, and selecting the larger one of $R_f$ and $R_r$ as a whole-vehicle sideslip evaluation index $J_2$;
step 2.3, performing weighted processing on the rollover evaluation index $J_1$ and the sideslip evaluation index $J_2$ to obtain the comprehensive stability evaluation index $RSS = \frac{w_1 J_1 + w_2 J_2}{w_1 + w_2}$ ; and

step 2.4, updating the weight of *RSS* by using a deep reinforcement learning algorithm TD3 for training.

As a further solution of the present invention: steps of a reinforcement learning training method for the comprehensive stability evaluation index are as follows:

step 3.1, defining a state as $s = [J_1, J_2]$;

step 3.2, defining an action as $a = [dw_1, dw_2]$, where $dw_1$, $dw_2$ are weight coefficient adjustment amounts of *LTR* and *R*, respectively;

step 3.3, defining a reward function for learning;

step 3.4, constructing a strategy network Actor and an evaluation network Critic, wherein the Actor network comprises two networks: network Actor and network Target Actor, the Critic network comprises four networks: network Critic1, network Critic2, network Target Critic1, and network Target Critic2; network Actor, network Critic1 and network Critic2 are updated through gradients, and networks Target Actor and Target Critic are updated by means of soft updates;

step 4.5, bringing the comprehensive stability evaluation index updated each time into a priori effective stability control algorithm to serve as a basis for stability control of a control algorithm, by means of a state quantity $s = [J_1, J_2]$, determining whether the vehicle is controlled to be unstable or not by using the comprehensive stability evaluation index updated this time, and giving a reward value according to the reward function.

As a further solution of the present invention: a critical value of the comprehensive stability evaluation index *RSS* is $RSS_{th}$, when $RSS > RSS_{th}$, it is determined that the lateral instability of the vehicle occurs, and the comprehensive stability evaluation index *RSS* is limited below the critical value in the process of path tracking.

As a further solution of the present invention: a state variable of the MPC controller system is $x = [\dot{x}\ \dot{y}\ \varphi\ \dot{\varphi}\ \phi\ \dot{\phi}\ X\ Y]^T$, an output variable is $u = [\delta\ M_z\ M_t]^T$, and an output variable is $y = [\varphi\ \phi\ Y]^T$;

an objective function expression of the MPC controller system is as follows:

$$J(t) = \sum_{i=1}^{N_p} \left( \begin{array}{l} \left\| Y(t+i|t) - Y_{ref}(t+i|t) \right\|_{Q_1}^2 + \\ \left\| \dot{x}(t+i|t) - \dot{x}_{ref}(t+i|t) \right\|_{Q_2}^2 + \\ \left\| RSS(t+i|t) - RSS_{ref}(t+i|t) \right\|_{Q_3}^2 \end{array} \right) + \sum_{i=1}^{N_c-1} \left\| \Delta u(t+i|t) \right\|_R^2 + \rho \varepsilon^2$$

where $y = [\varphi\ \phi\ Y]^T$ are each an output state weight matrix, *R* is a control quantity weight matrix, $\varepsilon$ is a relaxation factor, and its weight coefficient is *p*.

As a further solution of the present invention: the construction of the MPC controller system in step 4 comprises the following steps:

step 4.1, constructing a four-degree-of-freedom vehicle dynamics model system:

$$\begin{cases} m(\ddot{x} - \dot{y}\dot{\varphi}) = (F_{x1} + F_{x2})\cos\delta - (F_{y1} + F_{y2})\sin\delta + F_{x3} + F_{x4} \\ m(\ddot{y} + \dot{x}\dot{\varphi}) - m_s h_s \ddot{\phi} = (F_{y1} + F_{y2})\cos\delta + (F_{x1} + F_{x2})\sin\delta + F_{y3} + F_{y4} \\ I_z \ddot{\varphi} = ((F_{x1} + F_{x2})\sin\delta + (F_{y1} + F_{y2})\cos\delta)l_f - (F_{y3} + F_{y4})l_r \\ \qquad + ((F_{y1} - F_{y2})\sin\delta + (F_{x2} - F_{x1})\cos\delta + F_{x4} - F_{x3})B \\ I_x \ddot{\phi} = m_s h_s(\ddot{y} + \dot{x}\dot{\varphi}) + m_s g h_s \sin\phi - K_\phi \phi - C_\phi \dot{\phi} \\ \dot{X} = \dot{x}\cos\varphi - \dot{y}\sin\varphi \\ \dot{Y} = \dot{x}\sin\varphi + \dot{y}\cos\varphi \end{cases}$$

step 4.2, setting a reference trajectory of path tracking to a sixth-degree Bezier curve, with a reference trajectory equation of:

$$X_{ref} = \sum_{i=0}^{6} x_{i,i}(u) = x_0(1-u)^6 + 6x_1 u(1-u)^5$$
$$+15x_2 u^2(1-u)^4 + 20x_3 u^3(1-u)^3$$
$$+15x_4 u^4(1-u)^2 + 6x_5 u^5(1-u) + x_6 u^6$$

$$Y_{ref} = \sum_{i=0}^{6} y_{i,i}(u) = y_0(1-u)^6 + 6y_1 u(1-u)^5$$
$$+15y_2 u^2(1-u)^4 + 20y_3 u^3(1-u)^3$$
$$+15y_4 u^4(1-u)^2 + 6y_5 u^5(1-u) + y_6 u^6$$

$$\varphi_{ref} = arctan(\frac{dY_{ref}}{dX})$$

step 4.3, determining the state variable $x = [\dot{x}\,\dot{y}\,\varphi\,\dot{\varphi}\,\phi\,\dot{\phi}\,X\,Y]^T$, the control variable $u = [\delta\,M_z\,M_{\dot{q}}]^T$, and the output variable $y = [\varphi\,\phi\,Y]^T$ of the MPC controller system, and expressing the vehicle system in the following form:

$$\begin{cases} \dot{x}(t) = Ax(t) + Bu(t) \\ y(t) = Cx(t) \end{cases}$$

step 4.4, discretizing the vehicle system:

$$\begin{cases} x(k+1) = A(k)x(k) + B(k)u(k) \\ y(k) = C(k) \end{cases}$$

where $A(k) = 1 + TA(t)$, $B(k) = TB(t)$, $I$ is an unit matrix, and $T$ is a sampling time;
step 4.5, using a control increment $\Delta u(k|t) = u(k|t) - u(k-1|t)$ to replace the control variable, so that the system can be expressed as:

$$\tilde{x}(k+1|t) = \tilde{A}(k)\tilde{x}(k|t) + \tilde{B}(k)\Delta u(k|t)$$

$$y(k|t) = \tilde{C}\tilde{x}(k|t)$$

where $\tilde{x}(k|t) = \begin{bmatrix} x(k|t) \\ u(k-1|t) \end{bmatrix}$, $\tilde{A}(k) = \begin{bmatrix} A(k) & B(k) \\ 0 & I \end{bmatrix}$, $\tilde{B}(k) = [B(k)\ I]$, and $\tilde{C} = [C\ 0]$.

step 4.6, expressing a prediction output as follows:

$$Y(k) = \psi_s \tilde{x}(k|t) + \Theta_s \Delta U(k)$$

where

$$Y(k) = \begin{bmatrix} y(k+1 \mid t) \\ y(k+2 \mid t) \\ \cdots \\ y(k+N_c \mid t) \\ \cdots \\ y(k+N_p \mid t) \end{bmatrix}, \quad \psi_s = \begin{bmatrix} \tilde{C}_s A_s \\ \tilde{C}_s A_s^2 \\ \cdots \\ \tilde{C}_s A_s^{N_c} \\ \cdots \\ \tilde{C}_s A_s^{N_p} \end{bmatrix},$$

and

$$\Delta U(k) = [\Delta u(k \mid t) \; \Delta u(k+1 \mid t) \; \cdots \Delta u(k+N_c \mid t)]^T$$

$$\Theta_s = \begin{bmatrix} \tilde{C}_s \tilde{B}_s & 0 & 0 & 0 \\ \tilde{C}_s \tilde{A}_s \tilde{B}_s & \tilde{C}_s \tilde{B}_s & 0 & 0 \\ \cdots & \cdots & \ddots & \cdots \\ \tilde{C}_s \tilde{A}_s^{N_c-1} \tilde{B}_s & \tilde{C}_s \tilde{A}_s^{N_c-2} \tilde{B}_s & \cdots & \tilde{C}_s \tilde{B}_s \\ \tilde{C}_s \tilde{A}_s^{N_c} \tilde{B}_s & \tilde{C}_s \tilde{A}_s^{N_c-1} \tilde{B}_s & \cdots & \tilde{C}_s \tilde{A}_s \tilde{B}_s \\ \vdots & \vdots & \ddots & \vdots \\ \tilde{C}_s \tilde{A}_s^{N_p-1} \tilde{B}_s & \tilde{C}_s \tilde{A}_s^{N_c-1} \tilde{B}_s & \cdots & \tilde{C}_s \tilde{A}_s^{N_p-N_c-1} \tilde{B}_s \end{bmatrix}$$

where $N_p$ is a prediction time domain, $N_c$ is a control time domain, and $N_c < N_p$ is satisfied; and step 4.7, a constructed objective function expression being as follows:

$$J(t) = \sum_{i=1}^{N_p} \left( \begin{array}{c} \left\| Y(t+i|t) - Y_{ref}(t+i|t) \right\|_{Q_1}^2 + \\ \left\| \dot{x}(t+i|t) - \dot{x}_{ref}(t+i|t) \right\|_{Q_2}^2 + \\ \left\| RSS(t+i|t) - RSS_{ref}(t+i|t) \right\|_{Q_3}^2 \end{array} \right) + \sum_{i=1}^{N_c-1} \left\| \Delta u(t+i|t) \right\|_R^2 + \rho \varepsilon^2$$

where $Q_1, Q_2, Q_3$ are each an output state weight matrix, $R$ is a control quantity weight matrix, $\varepsilon$ is a relaxation factor, and its weight coefficient is $\rho$.

As a further solution of the present invention: step 5 comprises the following steps:

step 5.1, inputting vehicle dynamic parameters and a vehicle desired path into the MPC controller for path tracking;
step 5.2, calculating, by the MPC controller for path tracking, control variable parameters of the vehicle through the input vehicle dynamic parameters and vehicle desired path; and
step 5.3: receiving, by the vehicle, the control variable parameters and controlling the vehicle through the control variable parameters.

As a further solution of the present invention: the control variable parameters comprise control variables of front wheel steering angle, roll moment and yaw moment, and the control variables of front wheel steering angle, roll moment and yaw moment are realized by controlling a steering wheel angle, a support force of a suspension and a longitudinal force of four wheels, respectively.

Compared with the prior art, the present invention has the following beneficial effects:

1. The present invention takes into account the roll instability and sideslip instability in a complex terrain, establishes a roll instability evaluation index and a sideslip instability evaluation index, combines the two to propose a comprehensive lateral stability evaluation index, and continuously optimizes the evaluation index through a reinforcement learning algorithm, so that the evaluation index can more accurately characterize the lateral stability.
2. The present invention designs an MPC controller, which comprehensively considers the accuracy and stability of path tracking, and ensures that the accuracy as for the forklift is improved under the premise that lateral instability does not occur in the trajectory tracking process in a complex terrain.

**Brief description of the drawings**

Fig. 1 is a control flowchart of the embodiment; and
Fig. 2 is a flowchart of optimizing a comprehensive stability evaluation index in the embodiment.

**Detailed description of the embodiments**

The technical solutions in the embodiments of the present invention will be clearly and completely described below with reference to the drawings in the embodiments of the present invention. Obviously, the described embodiments are only a part of the embodiments of the present invention, rather than all the embodiments. Based on the embodiments of the present invention, all other embodiments obtained by those of ordinary skill in the art without creative efforts shall fall within the protection scope of the present invention.

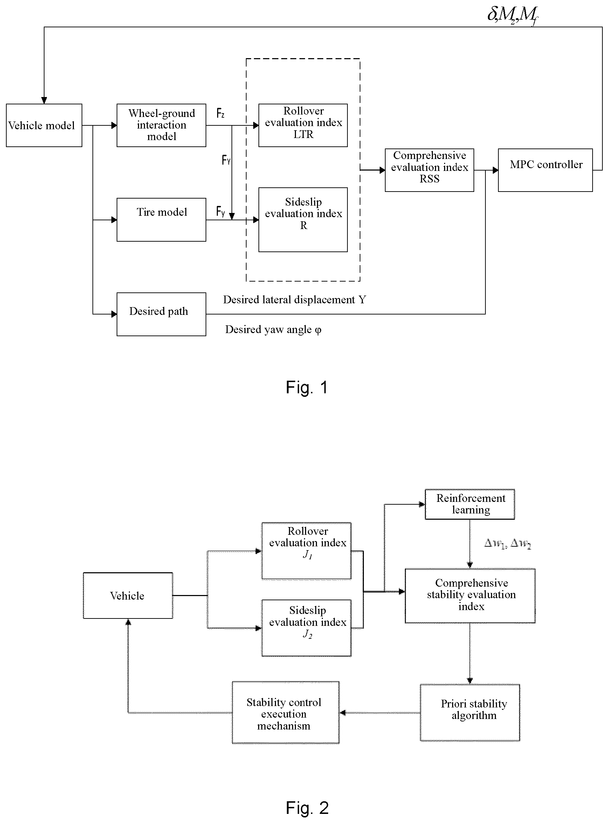

Referring to Fig. 1, in an embodiment of the present invention, a method for controlling the path tracking stability of an off-road vehicle in a complex terrain is provided, wherein control steps are as follows:

Step 1: First of all, construct a wheel-ground interaction model to obtain a longitudinal force $F_x$, a lateral force $F_y$ and a vertical force of $F_z$ of a wheel-ground interaction.

Steps of constructing the wheel-ground interaction model are as follows:

step 1.1, constructing a static pressure-bearing model to obtain a static sinkage of a wheel;

$$z_0 = \left[ \frac{3W}{\sqrt{2r}(k_c + bk_\varphi)(3 - n)} \right]^{\frac{2}{2n+1}}$$

step 1.2, calculating a slip ratio of the wheel, and constructing a dynamic sinking model of the wheel to obtain a normal stress calculation method that takes wheel sinking into consideration:

$$\sigma(\theta) = \begin{cases} \left(\frac{k_c}{b} + k_\varphi\right)\left(r(\cos\theta - \cos\theta_1)\right)^N & (\theta_m < \theta \leq \theta_1) \\ \left(\frac{k_c}{b} + k_\varphi\right)\left\{r\left(\cos\left(\theta_1 - (\theta_1 - \theta_m)\left(\frac{\theta - \theta_2}{\theta_m - \theta_2}\right)\right) - \cos\theta_1\right)\right\}^N & (\theta_2 \leq \theta \leq \theta_m) \end{cases}$$

where, s is a slip ratio, N is a dynamic sinking index, which is related to the slip ratio, $\theta_1$ is a wheel approach angle, $\theta_2$ is a wheel departure angle, and $\theta_m$ is a maximum stress angle; and

step 1.3, constructing a shear model to obtain a shear stress calculation method that takes wheel sinking into account. The shear stress may be decomposed into $\tau_x$ in an x-axis direction and $\tau_y$ in a y-axis direction of a wheel coordinate system.

$$\tau_x(\theta) = (c + \sigma(\theta)\tan\varphi)\left(1 - e^{-j_x(\theta)/K_x}\right)$$

$$\tau_y(\theta) = (c + \sigma(\theta)\tan\varphi)\left(1 - e^{-j_y(\theta)/K_y}\right)$$

Therefore, a resultant force $F_x$ in a horizontal direction and a resultant force $F_z$ in a vertical direction can be obtained:

$$F_{ws-x} = rb\int_{\theta_2}^{\theta_1} (\tau_x \cos\theta - \sigma\sin\theta)d\theta$$

$$F_{ws-z} = rb \int_{\theta_2}^{\theta_1} (\tau_x \sin\theta + \sigma \cos\theta) d\theta$$

When the vehicle turns, the wheels will generate two lateral forces, wherein $F_u$ is caused by a y-axis component $\tau_y$ $(\theta)$ of shear stress, and $F_s$ is generated by lateral bulldozing, that is:

$$F_{ws-y} = F_u + F_s = \int_{\theta_2}^{\theta_1} rb\tau_y(\theta) d\theta + \int_{\theta_2}^{\theta_1} R_b (r - z(\theta)\cos\theta) d\theta$$

where:

$$R_b(h) = D_1 \left( zc + D_2 \frac{z^2 \rho}{2} \right), \quad D_1 = \cot X_c + \tan(X_c + \varphi), \quad D_2 = \left( \cot X_c + \cot^2 X_c / \cot\varphi \right),$$

and

$$X_c = \frac{\pi}{4} - \frac{\varphi}{2}.$$

Step 2: According to the force obtained from the wheel-ground interaction model in step 1, construct a roll evaluation index $J_1$ and a sideslip evaluation index $J_2$ of the vehicle, and perform weighted processing on the two indexes to obtain a comprehensive stability evaluation index *RSS* (referring to Fig. 2).

Steps for establishing and optimizing the comprehensive stability evaluation index are as follows:

step 2.1, establishing a rollover evaluation index $J_1$

$$J_1 = LTR = \left| \frac{F_{ws-zfl} + F_{ws-zrl} - (F_{ws-zfr} + F_{ws-zrr})}{F_{ws-zfl} + F_{ws-zrl} + F_{ws-zfr} + F_{ws-zrr}} \right|$$

step 2.2, establishing sideslip evaluation indexes $R_f$ and $R_r$ of a front axle and a rear axle

$$R_f = \left| \frac{F_{yfl} + F_{yfr}}{F_{ws-yfl} + F_{ws-yfr}} \right|$$

$$R_r = \left| \frac{F_{yrl} + F_{yrr}}{F_{ws-yrl} + F_{ws-yrr}} \right|$$

selecting the larger one of $R_f$ and $R_r$ as a whole-vehicle sideslip evaluation index $J_2$;

$$J_2 = max(R_f, R_r)$$

step 2.3, performing weighted processing on the rollover evaluation index $J_1$ and the sideslip evaluation index $J_2$ to

obtain the comprehensive stability evaluation index  $RSS = \frac{w_1 J_1 + w_2 J_2}{w_1 + w_2}$ ; and

step 2.4, updating the weight of *RSS* by using a deep reinforcement learning algorithm TD3 for training.

Step 3: Train the comprehensive stability evaluation index by means of reinforcement learning, and adjust weight coefficients of $J_1$ and $J_2$ in the comprehensive stability evaluation index *RSS*.

Steps of a reinforcement learning training method for the comprehensive stability evaluation index are as follows:

step 3.1, defining a state as $s = [J_1, J_2]$

step 3.2, defining an action as $a = [\Delta w_1 \Delta w_2]$, where $\Delta w_1, \Delta w_2$ are weight coefficient adjustment amounts of $J_1$ and $J_2$,

respectively.

Step 3.3, defining a reward function $R_t$ for learning:

$$R_t = k_1 R_1 + k_2 R_2$$

where $R_1$ is a roll evaluation reward value, $R_2$ is a sideslip evaluation reward value, and as shown in the following formula, and $k_1, k_2$ are coefficients corresponding to the reward values.

$$R_1 = \begin{cases} 1, & 0 \leq J_1 \leq 0.6 \\ \frac{2}{\pi} arctan(\frac{1}{J_1 - 1}), & 0.6 < J_1 \leq 0.9 \\ -1, & 0.9 < J_1 \leq 1 \end{cases}$$

$$R_2 = \begin{cases} 1, & 0 \leq J_1 \leq 0.7 \\ \frac{2}{\pi} arctan(\frac{1}{J_2 - 1}), & 0.7 < J_1 < 1 \\ -1, & J_1 = 1 \end{cases}$$

step 3.4, constructing a strategy network (Actor) and an evaluation network (Critic), wherein the Actor network comprises two networks: network Actor and network Target Actor, the Critic network comprises four networks: network Critic1, network Critic2, network Target Critic1, and network Target Critic2; the input of the Actor network is a state, and the output is an action; and the input of the Critic network is a state and an action, and the output is a Q value.

The update process of Critic network parameters is as follows:

Step 3.4.1, network Target Actor predicts an action $a_{t+1}$ in the state of $s_{t+1}$;

step 3.4.2, noise $\varepsilon$ is added to the action $a_{t+1}$ as the input of network Target Critic1 and the input of network Target Critic2, wherein the purpose of adding the noise is to add noise to the output action of network Target Actor, which can increase the diversity of exploration, thereby making the Q value of the next step more accurate;

step 3.4.3, the Q values output by the two Target Critic networks are compared, and the smaller Q value of the two is selected, so that an actual value $y$ can be obtained:

$$y = r + \gamma \min_{i=1,2} Q_{tar,i}(s_{t+1}, a_{t+1})$$

step 3.4.4, the mean square error of the actual value $y$ and each of the outputs $Q_1$ (st, $a_t$) and $Q_2(s_t, a_t)$ of the Critic networks is calculated, to calculate a *Loss* function:

$$Loss = (Q_{\omega_i}(s_t, a_t) - y)^2, i = 1,2$$

step 3.4.5, parameters $\omega_1, \omega_2$ of the Critic network are updated by using a gradient descent method:

$$\nabla_{\omega_i} \frac{1}{|B|} \sum_{(s_t, a_t, r_t, s_{t+1}) \in B} (Q_{\omega_i}(s_t, a_t) - y)^2$$

the Actor network uses $Q_1$ (or $Q_2$) output by calculation of network Critic1 (or Critic2) as the Loss function and updates the parameters $\theta$ by means of gradient ascent:

$$\nabla_\theta \frac{1}{|B|} \sum_{s \in B} Q_{\omega_1}(s, a)$$

networks Target Actor and Target Critic are updated by means of soft updates:

$$\omega_i' \leftarrow \tau\omega_i + (1 - \tau)\omega_i'$$

$$\theta' \leftarrow \tau\theta + (1 - \tau)\theta'$$

step 3.5, the comprehensive stability evaluation index updated each time is brought into a priori effective stability control algorithm as a basis for stability control of a control algorithm, by means of a state quantity $s = [J_1, J_2]$, whether the vehicle is controlled to be unstable through a stability control executing mechanism or not is determined by using the comprehensive stability evaluation index updated this time, and a reward value is given according to the reward function.

Step 4: Construct an MPC controller that takes into account the path tracking accuracy and stability during the tracking process.

Step 4.1: constructing a four-degree-of-freedom vehicle dynamics model system:

$$\begin{cases} m(\ddot{x} - \dot{y}\dot{\varphi}) = (F_{x1} + F_{x2})\cos\delta - (F_{y1} + F_{y2})\sin\delta + F_{x3} + F_{x4} \\ m(\ddot{y} + \dot{x}\dot{\varphi}) - m_s h_s \ddot{\phi} = (F_{y1} + F_{y2})\cos\delta + (F_{x1} + F_{x2})\sin\delta + F_{y3} + F_{y4} \\ I_z \ddot{\varphi} = ((F_{x1} + F_{x2})\sin\delta + (F_{y1} + F_{y2})\cos\delta)l_f - (F_{y3} + F_{y4})l_r \\ \qquad + ((F_{y1} - F_{y2})\sin\delta + (F_{x2} - F_{x1})\cos\delta + F_{x4} - F_{x3})B \\ I_x \ddot{\phi} = m_s h_s(\ddot{y} + \dot{x}\dot{\varphi}) + m_s g h_s \sin\phi - K_\phi \phi - C_\phi \dot{\phi} \\ \dot{X} = \dot{x}\cos\varphi - \dot{y}\sin\varphi \\ \dot{Y} = \dot{x}\sin\varphi + \dot{y}\cos\varphi \end{cases}$$

Step 4.2: setting a reference trajectory of path tracking to a sixth-degree Bezier curve, with a reference trajectory equation of:

$$X_{ref} = \sum_{i=0}^{6} x_{i,i}(u) = x_0(1-u)^6 + 6x_1 u(1-u)^5$$
$$+15x_2 u^2(1-u)^4 + 20x_3 u^3(1-u)^3$$
$$+15x_4 u^4(1-u)^2 + 6x_5 u^5(1-u) + x_6 u^6$$

$$Y_{ref} = \sum_{i=0}^{6} y_{i,i}(u) = y_0(1-u)^6 + 6y_1 u(1-u)^5$$
$$+15y_2 u^2(1-u)^4 + 20y_3 u^3(1-u)^3$$
$$+15y_4 u^4(1-u)^2 + 6y_5 u^5(1-u) + y_6 u^6$$

$$\varphi_{ref} = arctan(\frac{dY_{ref}}{dX})$$

Step 4.3: determining the state variable $x = [\dot{x}\ \dot{y}\ \varphi\ \dot{\varphi}\ \phi\ \dot{\phi}\ X\ Y]^T$, the control variable $u = [\delta\ M_z\ M_\phi]^T$, and the output variable $y = [\varphi\ \phi\ Y]^T$ of the MPC controller system, and the vehicle system is expressed in the following form:

$$\begin{cases} \dot{x}(t) = Ax(t) + Bu(t) \\ y(t) = Cx(t) \end{cases}$$

Step 4.4: the vehicle system is discretized:

$$\begin{cases} x(k+1) = A(k)x(k) + B(k)u(k) \\ y(k) = C(k) \end{cases}$$

where $A(k) = 1 + TA(t)$, $B(k) = TB(t)$, $I$ is an unit matrix, and $T$ is a sampling time.

Step 4.5: a control increment $\Delta u(k|t) = u(k|t) - u(k-1|t)$ is used to replace the control variable, and the system may be expressed as:

$$\tilde{x}(k+1|t) = \tilde{A}(k)\tilde{x}(k|t) + \tilde{B}(k)\Delta u(k|t)$$

$$y(k|t) = \tilde{C}\tilde{x}(k|t)$$

where $\tilde{x}(k|t) = \begin{bmatrix} x(k|t) \\ u(k-1|t) \end{bmatrix}$, $\tilde{A}(k) = \begin{bmatrix} A(k) & B(k) \\ 0 & I \end{bmatrix}$, $\tilde{B}(k) = [B(k)\ I]$, and $\tilde{C} = [C\ 0]$.

Step 4.6: a prediction output is expressed in the following form:

$$Y(k) = \psi_s \tilde{x}(k|t) + \Theta_s \Delta U(k)$$

where

$$Y(k) = \begin{bmatrix} y(k+1\mid t) \\ y(k+2\mid t) \\ \cdots \\ y(k+N_c\mid t) \\ \cdots \\ y(k+N_p\mid t) \end{bmatrix}, \quad \psi_s = \begin{bmatrix} \tilde{C}_s A_s \\ \tilde{C}_s A_s^2 \\ \cdots \\ \tilde{C}_s A_s^{N_c} \\ \cdots \\ \tilde{C}_s A_s^{N_p} \end{bmatrix},$$

and

$$\Delta U(k) = [\Delta u(k\mid t)\ \Delta u(k+1\mid t)\ \cdots \Delta u(k+N_c\mid t)]^T$$

$$\Theta_s = \begin{bmatrix} \tilde{C}_s \tilde{B}_s & 0 & 0 & 0 \\ \tilde{C}_s \tilde{A}_s \tilde{B}_s & \tilde{C}_s \tilde{B}_s & 0 & 0 \\ \cdots & \cdots & \ddots & \cdots \\ \tilde{C}_s \tilde{A}_s^{N_c-1} \tilde{B}_s & \tilde{C}_s \tilde{A}_s^{N_c-2} \tilde{B}_s & \cdots & \tilde{C}_s \tilde{B}_s \\ \tilde{C}_s \tilde{A}_s^{N_c} \tilde{B}_s & \tilde{C}_s \tilde{A}_s^{N_c-1} \tilde{B}_s & \cdots & \tilde{C}_s \tilde{A}_s \tilde{B}_s \\ \vdots & \vdots & \ddots & \vdots \\ \tilde{C}_s \tilde{A}_s^{N_p-1} \tilde{B}_s & \tilde{C}_s \tilde{A}_s^{N_c-1} \tilde{B}_s & \cdots & \tilde{C}_s \tilde{A}_s^{N_p-N_c-1} \tilde{B}_s \end{bmatrix}$$

where $N_p$ is a prediction time domain, $N_c$ is a control time domain, and $N_c < N_p$ is satisfied.

Step 4.7: a constructed objective function expression is as follows:

$$J(t) = \sum_{i=1}^{N_p} \begin{pmatrix} \left\| Y(t+i|t) - Y_{ref}(t+i|t) \right\|_{Q_1}^2 + \\ \left\| \dot{x}(t+i|t) - \dot{x}_{ref}(t+i|t) \right\|_{Q_2}^2 + \\ \left\| RSS(t+i|t) - RSS_{ref}(t+i|t) \right\|_{Q_3}^2 \end{pmatrix} + \sum_{i=1}^{N_c-1} \left\| \Delta u(t+i|t) \right\|_R^2 + \rho \varepsilon^2$$

where $Q_1, Q_2, Q_3$ are each an output state weight matrix, $R$ is a control quantity weight matrix, $\varepsilon$ is a relaxation factor, and its weight coefficient is $\rho$.

Step 4.8: the control quantity, the control quantity variable and the output quantity are constrained,

$$ucmax_{min}$$

$$\Delta ucmax_{min}$$

$$ycmax_{min}$$

Step 5: The front wheel steering angle, suspension force, and longitudinal force of four wheels are distributed according to the output calculated by the MPC controller.

Step 5.1: vehicle dynamic parameters and a vehicle desired path are input into the MPC controller for path tracking.

Step 5.2: the MPC controller for path tracking calculates control variable parameters of the vehicle through the input vehicle dynamic parameters and vehicle desired path.

Step 5.3: the vehicle receives the control variable parameters and controls the vehicle through the control variable parameters.

When the comprehensive stability evaluation index $RSS$ is greater than the critical value $RSS_{th}$, it is considered that the lateral instability of the vehicle occurs. The instability represents lateral instability or rollover and side sliding. During the path tracking process, the comprehensive stability evaluation index $RSS$ is limited to below the critical value.

In the method for controlling the stability in the path tracking process of an off-road vehicle in a complex terrain, vehicle dynamics parameters are input into an MPC path tracking controller. When designing an MPC control objective function, the lateral position and lateral stability are taken into account. At the same time, the dynamic constraints, control quantity increment and output quantity constraints are also taken into account, thereby calculating appropriate control variable values. The control variables of front wheel steering angle, roll moment and yaw moment are realized by controlling a steering wheel angle, a support force of a suspension and a longitudinal force of four wheels, respectively.

For those skilled in the art, it is obvious that the present invention is not limited to the details of the above-mentioned exemplary embodiment, and the present invention can be implemented in other specific forms without departing from the spirit or basic features of the present invention. Therefore, from any point of view, the embodiment should be regarded as exemplary and non-limiting. The scope of the present invention is defined by the appended claims rather than the above description, and therefore it is intended that all changes falling within the meaning and scope of equivalent elements of the claims are included in the present invention. Any reference signs in the claims should not be regarded as limiting the claims involved.

**Claims**

1.  A method for controlling the path tracking stability of an off-road vehicle in a complex terrain, **characterized by** comprising the following steps:

    step 1, constructing a wheel-ground interaction model to obtain a longitudinal force $F_x$, a lateral force $F_y$ and a vertical force of $F_z$ of a wheel-ground interaction;
    step 2, constructing a roll evaluation index $J_1$ and a sideslip evaluation index $J_2$ through the wheel-ground interaction model, and performing weighted processing on the two indexes to obtain a comprehensive stability evaluation index $RSS$;
    step 3, training the comprehensive stability evaluation index, and adjusting weight coefficients of $J_1$ and $J_2$ in the comprehensive stability evaluation index $RSS$;
    step 4, constructing an MPC controller through the comprehensive stability evaluation index; and
    step 5, performing stability control of the vehicle through the MPC controller.

2.  The method for controlling the path tracking stability of an off-road vehicle in a complex terrain according to claim 1, **characterized in that** constructing the wheel-ground interaction model comprises the following steps:

    step 1.1, constructing a static pressure-bearing model to obtain a static sinkage of a wheel;
    step 1.2, calculating a slip ratio of the wheel, and constructing a dynamic sinking model of the wheel to obtain a normal stress calculation method that takes wheel sinking into consideration; and
step 1.3, constructing a shear model to obtain a shear stress calculation method that takes wheel sinking into account.

**3.** The method for controlling the path tracking stability of an off-road vehicle in a complex terrain according to claim 1, **characterized in that** steps for establishing and optimizing the comprehensive stability evaluation index are as follows:

step 2.1, establishing a rollover evaluation index $J_1$;
step 2.2, establishing sideslip evaluation indexes $R_f$ and $R_r$ of a front axle and a rear axle, and selecting the larger one of $R_f$ and $R_r$ as a whole-vehicle sideslip evaluation index $J_2$;
step 2.3, performing weighted processing on the rollover evaluation index $J_1$ and the sideslip evaluation index $J_2$ to obtain the comprehensive stability evaluation index

$$RSS = \frac{w_1 J_1 + w_2 J_2}{w_1 + w_2}$$ ; and

step 2.4, updating the weight of $RSS$ by using a deep reinforcement learning algorithm TD3 for training.

**4.** The method for controlling the path tracking stability of an off-road vehicle in a complex terrain according to claim 3, **characterized in that** steps of a reinforcement learning training method for the comprehensive stability evaluation index are as follows:

step 3.1, defining a state as $s = [J_1, J_2]$;
step 3.2, defining an action as $a = [dw_1, dw_2]$, where $dw_1$, $dw_2$ are weight coefficient adjustment amounts of $LTR$ and $R$, respectively;
step 3.3, defining a reward function for learning;
step 3.4, constructing a strategy network Actor and an evaluation network Critic, wherein the Actor network comprises two networks: network Actor and network Target Actor, the Critic network comprises four networks: network Critic1, network Critic2, network Target Critic1, and network Target Critic2; network Actor, network Critic1 and network Critic2 are updated through gradients, and networks Target Actor and Target Critic are updated by means of soft updates;
step 4.5, bringing the comprehensive stability evaluation index updated each time into an effective priori stability control algorithm to serve as a basis for stability control of a control algorithm, by means of a state quantity $s = [J_1, J_2]$, determining whether the vehicle is controlled to be unstable or not by using the comprehensive stability evaluation index updated this time, and giving a reward value according to the reward function.

**5.** The method for controlling the path tracking stability of an off-road vehicle in a complex terrain according to claim 3, **characterized in that** a critical value of the comprehensive stability evaluation index $RSS$ is $RSS_{th}$, when $RSS > RSS_{th}$, it is determined that the lateral instability of the vehicle occurs, and the comprehensive stability evaluation index $RSS$ is limited below the critical value in the process of path tracking.

**6.** The method for controlling the path tracking stability of an off-road vehicle in a complex terrain according to claim 1, **characterized in that** a state variable of the MPC controller system is $x = [\dot{x}\,\dot{y}\,\varphi\,\dot{\varphi}\,\phi\,\dot{\phi}\,X\,Y]^T$, an output variable is $u = [\delta\,M_z\,M_{fi}]^T$, and an output variable is $y = [\varphi\,\phi\,Y]^T$;

an objective function expression of the MPC controller system is as follows:

$$J(t) = \sum_{i=1}^{N_p} \left( \begin{array}{c} \left\| Y(t+i|t) - Y_{ref}(t+i|t) \right\|_{Q_1}^2 + \\ \left\| \dot{x}(t+i|t) - \dot{x}_{ref}(t+i|t) \right\|_{Q_2}^2 + \\ \left\| RSS(t+i|t) - RSS_{ref}(t+i|t) \right\|_{Q_3}^2 \end{array} \right) + \sum_{i=1}^{N_c-1} \left\| \Delta u(t+i|t) \right\|_{R}^2 + \rho\varepsilon^2$$

where $Q_1, Q_2, Q_3$ are each an output state weight matrix, $R$ is a control quantity weight matrix, $\varepsilon$ is a relaxation factor, and its weight coefficient is $p$.

**7.** The method for controlling the path tracking stability of an off-road vehicle in a complex terrain according to claim 6, **characterized in that** the construction of the MPC controller system in step 4 comprises the following steps:

step 4.1, constructing a four-degree-of-freedom vehicle dynamics model system:

$$\begin{cases} m(\ddot{x} - \dot{y}\dot{\varphi}) = (F_{x1} + F_{x2})\cos\delta - (F_{y1} + F_{y2})\sin\delta + F_{x3} + F_{x4} \\ m(\ddot{y} + \dot{x}\dot{\varphi}) - m_s h_s \ddot{\phi} = (F_{y1} + F_{y2})\cos\delta + (F_{x1} + F_{x2})\sin\delta + F_{y3} + F_{y4} \\ I_z \ddot{\varphi} = ((F_{x1} + F_{x2})\sin\delta + (F_{y1} + F_{y2})\cos\delta)l_f - (F_{y3} + F_{y4})l_r \\ \qquad + ((F_{y1} - F_{y2})\sin\delta + (F_{x2} - F_{x1})\cos\delta + F_{x4} - F_{x3})B \\ I_x \ddot{\phi} = m_s h_s (\ddot{y} + \dot{x}\dot{\varphi}) + m_s g h_s \sin\phi - K_\phi \phi - C_\phi \dot{\phi} \\ \dot{X} = \dot{x}\cos\varphi - \dot{y}\sin\varphi \\ \dot{Y} = \dot{x}\sin\varphi + \dot{y}\cos\varphi \end{cases}$$

step 4.2, setting a reference trajectory of path tracking to a sixth-degree Bezier curve, with a reference trajectory equation of:

$$X_{ref} = \sum_{i=0}^{6} x_{i,i}(u) = x_0(1-u)^6 + 6x_1 u(1-u)^5$$
$$+15x_2 u^2(1-u)^4 + 20x_3 u^3(1-u)^3$$
$$+15x_4 u^4(1-u)^2 + 6x_5 u^5(1-u) + x_6 u^6$$

$$Y_{ref} = \sum_{i=0}^{6} y_{i,i}(u) = y_0(1-u)^6 + 6y_1 u(1-u)^5$$
$$+15y_2 u^2(1-u)^4 + 20y_3 u^3(1-u)^3$$
$$+15y_4 u^4(1-u)^2 + 6y_5 u^5(1-u) + y_6 u^6$$

$$\varphi_{ref} = arctan(\frac{dY_{ref}}{dX})$$

step 4.3, determining the state variable $x = [\dot{x}\ \dot{y}\ \varphi\ \dot{\varphi}\ \phi\dot{\phi}\ X\ Y]^T$, the control variable $u = [\delta\ M_z\ M_f]^T$, and the output variable $y = [\varphi\ \phi\ Y]^T$ of the MPC controller system, and expressing the vehicle system in the following form:

$$\begin{cases} \dot{x}(t) = Ax(t) + Bu(t) \\ y(t) = Cx(t) \end{cases}$$

step 4.4, discretizing the vehicle system:

$$\begin{cases} x(k+1) = A(k)x(k) + B(k)u(k) \\ y(k) = C(k) \end{cases}$$

where $A(k) = 1 + TA(t)$, $B(k) = TB(t)$, $I$ is an unit matrix, and $T$ is a sampling time;

step 4.5, using a control increment $\Delta u(k|t) = u(k|t) - u(k-1|t)$ to replace the control variable, so that the system can be expressed as:

$$\tilde{x}(k+1|t) = \tilde{A}(k)\tilde{x}(k|t) + \tilde{B}(k)\Delta u(k|t)$$

$$y(k|t) = \tilde{C}\tilde{x}(k|t)$$

where $\tilde{x}(k|t) = \begin{bmatrix} x(k|t) \\ u(k-1|t) \end{bmatrix}$, $\tilde{A}(k) = \begin{bmatrix} A(k) & B(k) \\ 0 & I \end{bmatrix}$, $\tilde{B}(k) = [B(k)\ I]$, and $\tilde{C} = [C\ 0]$.

step 4.6, expressing a prediction output as follows:

$$Y(k) = \psi_s \tilde{x}(k|t) + \Theta_s \Delta U(k)$$

where

$$Y(k) = \begin{bmatrix} y(k+1\ |\ t) \\ y(k+2\ |\ t) \\ \cdots \\ y(k+N_c\ |\ t) \\ \cdots \\ y(k+N_p\ |\ t) \end{bmatrix}, \quad \psi_s = \begin{bmatrix} \tilde{C}_s A_s \\ \tilde{C}_s A_s^2 \\ \cdots \\ \tilde{C}_s A_s^{N_c} \\ \cdots \\ \tilde{C}_s A_s^{N_p} \end{bmatrix},$$

and

$$\Delta U(k) = [\Delta u(k\ |\ t)\ \Delta u(k+1\ |\ t)\ \cdots \Delta u(k+N_c\ |\ t)]^T$$

$$\Theta_s = \begin{bmatrix} \tilde{C}_s \tilde{B}_s & 0 & 0 & 0 \\ \tilde{C}_s \tilde{A}_s \tilde{B}_s & \tilde{C}_s \tilde{B}_s & 0 & 0 \\ \cdots & \cdots & \ddots & \cdots \\ \tilde{C}_s \tilde{A}_s^{N_c-1} \tilde{B}_s & \tilde{C}_s \tilde{A}_s^{N_c-2} \tilde{B}_s & \cdots & \tilde{C}_s \tilde{B}_s \\ \tilde{C}_s \tilde{A}_s^{N_c} \tilde{B}_s & \tilde{C}_s \tilde{A}_s^{N_c-1} \tilde{B}_s & \cdots & \tilde{C}_s \tilde{A}_s \tilde{B}_s \\ \vdots & \vdots & \ddots & \vdots \\ \tilde{C}_s \tilde{A}_s^{N_p-1} \tilde{B}_s & \tilde{C}_s \tilde{A}_s^{N_c-1} \tilde{B}_s & \cdots & \tilde{C}_s \tilde{A}_s^{N_p-N_c-1} \tilde{B}_s \end{bmatrix}$$

where $N_p$ is a prediction time domain, $N_c$ is a control time domain, and $N_c < N_p$ is satisfied; and
step 4.7, a constructed objective function expression being as follows:

$$J(t) = \sum_{i=1}^{N_p} \begin{pmatrix} \left\| Y(t+i|t) - Y_{ref}(t+i|t) \right\|_{Q_1}^2 + \\ \left\| \dot{x}(t+i|t) - \dot{x}_{ref}(t+i|t) \right\|_{Q_2}^2 + \\ \left\| RSS(t+i|t) - RSS_{ref}(t+i|t) \right\|_{Q_3}^2 \end{pmatrix} + \sum_{i=1}^{N_c-1} \left\| \Delta u(t+i|t) \right\|_R^2 + \rho\varepsilon^2$$

where $Q_1$, $Q_2$, $Q_3$ are each an output state weight matrix, $R$ is a control quantity weight matrix, $\varepsilon$ is a relaxation factor, and its weight coefficient is $p$.

8. The method for controlling the path tracking stability of an off-road vehicle in a complex terrain according to claim 1, **characterized in that** the step 5 comprises the following steps:

step 5.1, inputting vehicle dynamic parameters and a vehicle desired path into the MPC controller for path tracking;
step 5.2, calculating, by the MPC controller for path tracking, control variable parameters of the vehicle through the input vehicle dynamic parameters and vehicle desired path; and
step 5.3: receiving, by the vehicle, the control variable parameters, and controlling the vehicle through the control variable parameters.

9. The method for controlling the path tracking stability of an off-road vehicle in a complex terrain according to claim 8, **characterized in that** the control variable parameters comprise control variables of front wheel steering angle, roll moment and yaw moment, and the control variables of front wheel steering angle, roll moment and yaw moment are realized by controlling a steering wheel angle, a support force of a suspension and a longitudinal force of four wheels, respectively.

Fig. 1

Fig. 2

## INTERNATIONAL SEARCH REPORT

| | International application No. |
|---|---|
| | **PCT/CN2024/090995** |

**A.    CLASSIFICATION OF SUBJECT MATTER**

G05B19/042(2006.01)i;  G05B13/04(2006.01)i

According to International Patent Classification (IPC) or to both national classification and IPC

**B.    FIELDS SEARCHED**

Minimum documentation searched (classification system followed by classification symbols)

IPC: G05B G05D B60W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; ENTXTC: 车辆, 侧倾, 侧翻, 侧滑, 横摆, 横向载荷, 预测, 权值, 权重, 评价, 指标, 指数, 危险, 概率, 强化学习, vehicle, car, roll+, sideslip, yaw, load, MPC, weight, evaluat+, danger, probability

**C.    DOCUMENTS CONSIDERED TO BE RELEVANT**

| Category* | Citation of document, with indication, where appropriate, of the relevant passages | Relevant to claim No. |
|---|---|---|
| Y | CN 117389276 A (LIGONG LEIKE ZHITU (BEIJING) TECHNOLOGY CO., LTD.) 12 January 2024 (2024-01-12)<br>description, paragraphs [0005]-[0151], and figures 1-5 | 1, 2, 6-9 |
| Y | CN 113682317 A (TIANJIN UNIVERSITY OF TECHNOLOGY AND EDUCATION (CHINA VOCATIONAL TRAINING INSTRUCTOR TRAINING CENTER)) 23 November 2021 (2021-11-23)<br>description, paragraphs [0003]-[0023], and figure 1 | 1, 2, 6-9 |
| Y | CN 115805939 A (CHANG'AN UNIVERSITY) 17 March 2023 (2023-03-17)<br>description, paragraphs [0004]-[0161], and figures 1 and 2 | 6, 7 |
| A | CN 116353576 A (YANSHAN UNIVERSITY) 30 June 2023 (2023-06-30)<br>entire document | 1-9 |
| A | CN 115946679 A (BEIJING INSTITUTE OF TECHNOLOGY) 11 April 2023 (2023-04-11)<br>entire document | 1-9 |
| A | US 2005247510 A1 (TOYOTA MOTOR CO., LTD.) 10 November 2005 (2005-11-10)<br>entire document | 1-9 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 November 2024** | **04 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/090995**

| Patent document cited in search report | | | Publication date (day/month/year) | Patent family member(s) | | | Publication date (day/month/year) |
|---|---|---|---|---|---|---|---|
| CN | 117389276 | A | 12 January 2024 | None | | | |
| CN | 113682317 | A | 23 November 2021 | None | | | |
| CN | 115805939 | A | 17 March 2023 | None | | | |
| CN | 116353576 | A | 30 June 2023 | None | | | |
| CN | 115946679 | A | 11 April 2023 | None | | | |
| US | 2005247510 | A1 | 10 November 2005 | US | 7383917 | B2 | 10 June 2008 |

Form PCT/ISA/210 (patent family annex) (July 2022)